# EUROPEAN PATENT APPLICATION

(11) **EP 4 227 913 A1**
(43) Date of publication of application: **16.08.2023**
(21) Application number: 22155892.7
(22) Date of filing: 09.02.2022
(51) Int. Cl.: G06V 30/18

(54) **METHOD FOR DETERMINING A REFERENCE POSITION**

(71) Applicant: IAI industrial systems B.V., 5504 DE Veldhoven (NL)
(72) Inventor: AUGUSTINUS, Arnoud, 5504 DE Veldhoven (NL); KREMER, Jurgen, 5504 DE Veldhoven (NL)
(74) Representative: DTS Patent- und Rechtsanwälte Schnekenbühl und Partner mbB

(57) **Abstract**

The present invention relates to a method for determining a reference position (12a, 12b, 12c, 12d), on one side of a flat piece (12), wherein image data is acquired; a first reference pattern (32) is detected based on the image data, and first position data is determined for the first reference pattern (32); based on the first position data, a region of interest (36) is defined in the image data; in the region of interest (36), a second reference pattern (34) is detected and second position data is determined for the second reference pattern (34); based on the first position data and the second position data, the reference position (12a, 12b, 12c, 12d) is determined. In addition to that, the invention relates to a system for determining a reference position (12a, 12b, 12c, 12d) consisting of an image data acquisition unit (14) and an evaluation unit (15).

## Description

The present invention relates to a method and a system for determining a reference position, for example on one side of a flat piece, such as a plastic card.

In the treatment of flat pieces, for example, during the production and customization of plastic cards, the spatial accuracy of certain treatment steps is crucial. In part, this is due to incorporating more and more refined security features into the design of the card, for example, when creating an identity document, where the production and personalization process is highly controlled with defined conditions to make it harder to forge or tamper a document.

On the other hand, many objects and especially plastic cards are subject to varying conditions and tend to develop deformations and other spatial inconsistencies, which are very difficult to control or predict quantitatively. For example, treatment steps involving heat may lead to changing proportions and length scales on a plastic card, both globally over the whole card and locally in specific regions of the card.

As the need for spatial accuracy increases, the tolerance for such inconsistencies during production and treatment is decreasing. For example, specific features require an accuracy of below 50 µm for location measurements, preferably within a range of few µm.

One way of dealing with said uncertainties is to include a calibration step before treating the object. For example, a calibration can be carried out when a plastic card is provided to a printer or a laser engraving unit. Thus, the treatment can be adjusted depending on the card's specific properties.

In many cases, reference patterns or so-called fiducials are provided on the object and allow determining the object's condition, in particular its surface geometry. To this end, the reference patterns are detected and their localization is determined. In this context, it is challenging to determine the respective reference positions with sufficiently high accuracy to be able to adjust the treatment and reach satisfactory results.

In known methods, the position of fiducials can be measured using a subpixel pattern match with a local reference image as a model. Typically, this reference image is a real or a digitally created image very similar to the fiducial pattern to be located. The measured position of such a pattern match may be given in reference to the center of the model. As a consequence, the measured position may depend strongly on the cutout and content of the model image. Also, this is a single point measurement, making the method very sensitive for deviations in the image and causing measurement errors. Additionally, in this case, the measured position may not correspond to the actual position of another feature, whose position is needed for a specific treatment - instead, the position reflects a center of the model image. Thus, an additional manual correction is needed to calculate the desired position information.

It is one of the objects of the invention to provide a method and a system for determining a reference position, for example on one side of a flat piece, such as a plastic card, with improved accuracy and robustness. Also, the need for a manual correction should be avoided.

This problem is solved by a method and a system with the features of the independent claims. Further embodiments of the invention are laid out in the dependent claims.

The method for determining a reference position on a surface of an object, such as on one side of a flat piece, for example, a plastic card, includes a step, wherein image data is acquired. A first reference pattern is detected based on the image data, and first position data is determined for the first reference pattern. Based on the first position data, a region of interest is defined in the image data and, in the region of interest, a second reference pattern is detected and second position data is determined for the second reference pattern. Based on the first position data and the second position data, the reference position is determined.

It is one of the central ideas of the invention that the position of the first reference pattern may be determined with an improved accuracy, as it is related to the position of the second reference pattern. For example, it can be known *a priori* that the first and second reference patterns are aligned in a defined way or that they are offset relative to each other by a defined length and/or direction. By determining first and second position data, an improved and more precise reference position can be determined if the second position data is easier to determine with higher accuracy than the first position data.

Also, the method allows using the first position data for finding a relevant position for the region of interest, which is further used to determine the second reference pattern and corresponding second position data, and then evaluate the first and second position data to find an optimum estimate for the reference position.

In such a case, the first position data may include a first position estimate, which is then used to define the region of interest, where second position data is determined and used to refine the first position estimate and determine the reference position with optimum accuracy.

The method can be applied for a variety of different objects, in particular flat pieces. A flat piece can be a plastic card, for example made of polycarbonate, and it may have different design features. The reference position may be arranged in an area of the flat piece with different design features. For example, the reference position may be arranged on a plain surface of a plastic card. Also, the reference position may be positioned in the area of a window, an opening or a transparent section. Also, a lenticular array may be provided and the references position may be positioned in such an area.

Furthermore, the second reference pattern may be a design feature of a structured card surface, such as the edges of a structure.

For example, the flat piece may be an ID card or a passport datapage. Such flat pieces have different security features, which may include incorporating different structures on the surface and internally.

Also, the flat piece may have a pre-applied, printed color structure. The second reference pattern may be included in such a color structure of the flat piece.

Also, the flat piece may have one or more layers. For example, an angle-selective top layer may be provided on the card in the form of an embossed lenticular screen.

The first and/or second reference pattern may be applied on or within a transparent part of the card, such as a window, but also on a non-transparent area in the card, or at an edge of the window.

For example, the edge of a window or another structural feature of the flat piece may be one feature that is used to identify the first and/or second reference pattern.

In particular, the reference position is determined on the surface of an object such as a card. This information may be used to determine a surface geometry of the object.

The first reference position can be a position of the first reference pattern or of a feature that is defined by the first reference pattern, respectively.

The image data can be acquired by a method and/or device as known in the art. For example, a camera can be used. The acquisition can be done such that the image data is acquired in a detection area on a surface of an object; in particular, the reference position is to be determined within the detection area or on this surface, respectively.

In particular, the image data includes a set of detected intensity values with a given spatial resolution. Thus, intensity values are detected for defined positions or regions within a detection area; the device for acquiring the image data may be configured for acquiring the image data within the detection area on the surface of the object, such as a region on one side of a plastic card. For example, the image data may have intensity values for a plurality of picture elements (pixels), which are arranged in a matrix or an array, e.g., corresponding to an array of sensor elements that are used for the detection.

Also, the first reference pattern can be detected based on the image data by a method known in the art. For example, an image recognition algorithm may be used to detect the first reference pattern. Also, a matching algorithm may be used to match a subset of the image data with a given target pattern that represents the first reference pattern. For example, it may be known that the first reference pattern has the shape of a geometrical shape or a cross, and the matching algorithm may be used to localize such a pattern within the image data. Additionally or alternatively, further parameters such as orientation or size of the first reference pattern may be defined and used to localize the first reference pattern or characterize its configuration.

In an embodiment, the image data is acquired using a color- or wavelength-selective photosensitive device. For example, a camera or other photosensitive device may be equipped with a filter. Thus, a reference pattern can be detected that is formed by a light signal that is easily detected within a certain wavelength range, but which is not easily visible under less specific lighting or detection conditions.

For example, a camera can be used that is configured to detect light in the visible spectrum. Also, infrared or ultraviolet light may be used. The camera may have a sensor that is selectively sensitive for specific wavelengths or a specific range of wavelengths, and/or a filter may be provided for filtering out specific wavelengths or a specific range of wavelengths before the light hits the sensor. Also, an illumination setup may be used that uses specific wavelengths or a specific range of wavelengths to highlight the first and/or second reference patterns.

A filter may be used to selectively detect light at a specific wavelength or within a specific range of wavelengths, such as a cyan color. A color may be detected that is commonly used for printing, such as cyan, magenta and yellow, as in CMYK color models. In this case, the reference patterns can be formed by colors that are already present on the surface, e.g., within a printed area.

In an embodiment, image data is acquired for at least two separate wavelengths or two separate wavelength ranges, where the first reference pattern is evaluated using a first wavelength or a first wavelength range, and the second reference pattern is evaluated using a second wavelength or a second wavelength range. Thus, the first and second reference pattern can be provided such that they are detected at different wavelengths.

In an embodiment, the method includes applying a color-specific or wavelength-specific illumination, while acquiring the image data. In particular, the illumination is configured such that the first and/or second references pattern is shown with an enhanced contrast. For example, the surface of an object within the detection area may be illuminated with a color that is complementary to a color of the first and/or second reference patterns.

For example, the image data may be acquired in a grayscale format.

In one embodiment, the illumination is applied using a first color filter with an illumination device, such that a first and/or second reference patterns in a second color is represented as dark feature in the image data and is thus easily distinguished over other features with different colors. In particular, the first color is a complementary to the second color. For example, a red filter can be used for the illumination in order to have cyan colored features of a first and/or second reference patterns easily distinguished in the image data. Other examples of complementary colors can be used as well.

Additionally or alternatively, the camera or other image acquisition device can be equipped with a filter in order to filter specific wavelengths or colors.

In another embodiment, the first reference pattern has features in a first color and the second reference pattern has features in a second color. In particular, the first and second colors may be complementary colors. The image data acquisition may then include a first image data acquisition step using a first setup of color-selective illumination and/or detection based on the first color, and a second image data acquisition step using a second setup of color-selective illumination and/or detection based on the second color. Thus, the first and second reference patterns can be detected independently from each other in separate subsets of acquired image data.

The first position data that is determined for the first reference pattern can be an estimated position of the first reference pattern. Such a position may be defined in different ways, such as by a crossing point of two or several lines, a position of a "center of gravity" based on pixel intensity values, or a center of a geometric shape. The first position data may also have further information about the first reference pattern, such as orientation, size or geometric deformations, which can be determined in the detection step.

The first position data may be determined relative to an image data coordinate system that is defined for the image data. For example, a position value may be determined such that pixels are used as spatial units. Such an image data coordinate system may be related to another coordinate system, for example, a system-wide coordinate system, such that the first position data may be transformed to position data that can be addressed within the system-wide coordinate system to define a certain point on the surface of the object and to treat such a point, or to use the spatial information for calibrating another device.

The first and/or second reference patterns may be configured such that it can be detected by means of an intensity distribution with the image data, which is acquired in a suitable detection area. It may include a characteristic distribution of intensity values above or below a background intensity caused by a characteristic distribution of light-reflecting or light-absorbing material on the surface of the object.

In an embodiment, the first reference pattern has crossing lines, a dot shape, an elliptical, round, rectangular or square shape. Such shapes are especially easy to describe and to detect within image data.

Thus, determining the first position data may include determining a spatial parameter of the first reference pattern, such as a position of a crossing point, a midpoint, a center point, a point of inversion, a position and orientation of at least one symmetry axis, respectively.

In further embodiments, other first reference patterns can be formed, e.g., using an irregularity in the second reference pattern, such as a deviation from a symmetry property within the second reference pattern at the position of the first reference pattern.

Determining the region of interest within the image data can be done using methods known in the art. This may include determining a set of pixels of the image date, for example a rectangular selection. In particular, a position and/or orientation of the region of interest can be determined relative to the first position data for the first reference pattern, e.g., with a positional value for the first reference pattern as the midpoint of the region of interest.

In an embodiment, the second reference pattern includes a plurality of features that are arranged periodically along a periodicity axis. Thus, the second reference pattern may be easier to locate with increased accuracy. In particular, the information about the periodicity can be used to correct the second position data to achieve better accuracy.

A periodic characteristic of the second reference pattern with a known periodicity, may help to identify the second position data for the second reference data, as it gives increased information about the pattern to detect. For example, a matching algorithm determining the second position data can be optimized for identifying the second reference pattern with the given periodic characteristic. Also, Fourier transformation can be used to detect periodic patterns.

In another embodiment, the first reference pattern may have a plurality of first reference features.

A plurality of features of the first and/or second reference patterns may be equidistantly arranged along the periodicity axis. Also, the plurality of features may have a specific orientation, for example a similar or the same orientation for all features of the plurality.

In particular, the region of interest is selected and/or shaped to facilitate the identification of the second reference pattern. The region of interest may be chosen such that it has a longitudinal axis that runs parallel or perpendicular to along the periodicity axis of the second reference pattern.

In an embodiment, the second reference pattern has parallel lines, which run perpendicular to the periodicity axis. The lines may be arranged equidistantly. Thus, the second reference pattern is detected and the second position data can be determined with high precision.

For example, the second reference pattern may have a pattern of parallel, equidistantly arranged lines that are surrounding the first reference pattern. The position of the first reference pattern may then be clearly defined relatively to the parallel lines, e.g., when the reference position is located on one of the lines or at a well-defined position between lines.

In another embodiment the second reference pattern may have another type of structure with a plurality of regularly arranged and/or spaced features, such as a pattern of dots within a dot matrix or other shapes and arrangements. Advantageously, the regular arrangement is configured such that it shows a periodicity or translational symmetry in one or several defined directions.

In an embodiment, an integration and/or averaging step is performed on the image data within the region of interest. In particular, the image data is integrated and/or averaged along a direction perpendicular to the periodicity axis.

For example, the image data may represent intensity values that are integrated and/or averaged along a direction.

Such an integration and/or averaging step may serve to overcome noise within the image data, such that a higher precision of the second position data is reached. Such averaging may be facilitated, when the second reference pattern has a periodicity or symmetry: While a certain amount of noise may affect the determination of position data for single features of the second reference pattern, such noise can be cancelled out by averaging over several periodic features.

In an embodiment, determining the second position data consists of a line scan within the region of interest. Furthermore, determining the second position data may include integrating and/or averaging image data in a direction perpendicular to the direction of the line scan.

A line scan may be performed by defining a path within the image data and evaluating the acquired image data along this path. Thus, the path of the line scan may correspond to a path within the detection area on the object, and the path may have the pixels along a straight line.

The evaluation may include determining the intensity values along the length of the path. In particular, the image data may have intensity values for each pixel and the line scan has an evaluation of these intensity values of the pixels along the path. Thus, a spatial distribution of intensity values is determined.

To perform an integration and/or averaging of the image data, a width of the path and the evaluated image data along the path, respectively, can be defined. For example, the width is defined in a direction perpendicular to the path; the evaluation may then have adding and/or averaging the intensity values along the width of the path at each position of the path, and at each pixel of the path.

The line scan may be performed along a longitudinal axis of the region of interest, which may run substantially along the periodicity axis of the second reference pattern. Also, the line scan may be performed along a whole width of the region of interest. The line scan may be performed in a direction perpendicular to the periodicity axis of the second reference pattern.

For example, the region of interest may have a rectangular selection of pixels of the image data, with a longitudinal axis that is oriented substantially parallel to the periodicity axis of the second reference pattern, and a width of the region of interest perpendicular to the longitudinal axis of the region of interest. Thus, a line scan may be performed by evaluating the pixel matrix and scanning the image data along the longitudinal axis. For example, each row of pixels may be evaluated and transformed into one data point of the line scan. The pixel values, in particular intensity values for each pixel of the image data, of each row can be summed up and/or averaged, such that an integrated and/or averaged value is determined for each row of the pixel matrix, corresponding to one location along the longitudinal axis of the region of interest.

In an example, the second reference structure has a plurality of parallel straight lines; thus, a periodicity axis is defined perpendicular to the direction of the parallel lines. A region of interest may be defined with an elongated rectangular shape having a longitudinal axis that is substantially parallel to the periodicity axis of the second reference pattern. When a line scan is performed as described above, i.e., along the longitudinal axis of the region of interest and with the width of the region of interest, the lines are represented in the resulting line scan data as an intensity distribution with local extrema at the positions of lines, which are brighter or darker than the background. By performing an integration and/or averaging over the width of the region of interest, noise within the acquired image data is reduced.

To determine the second position data, the image data of the region of interest may be analyzed in different ways, such as by performing a line scan and a subsequent fitting step.

In the analysis of the image data, local and/or global extreme values may be used to determine peak values, e.g., using line scan data. Also, a smoothening operation may be performed on the image data or the data of a line scan. Also, a fitting operation may be performed, e.g., fitting a function to the values of a line scan, thus determining the parameters of a function that approximates at least a part of the image data.

A fitting algorithm may be used to determine the position of a structure within the image data, by determining the parameter values of a function within a region around a local extreme value. An intensity distribution along a line scan can be fitted to a Gaussian or similar distribution in order to determine a precise position estimate of the second reference structure.

The second position data may now be used to determine the reference position, by improving the first position estimate for the first reference structure. For example, the second position data may be evaluated to achieve a position estimate that is related to the first position data, with a higher accuracy, and a known spatial relation between the first and second reference pattern may be used to determine the reference position with improved accuracy.

A known spatial relation between the first and second reference structure is used. The position of the first reference structure coincides with a position of the second reference structure, such as a one of a plurality of lines. In this case, the first position data may represent a first estimate of the reference position, and this estimate may be improved by determining the position of the closest line of the second reference pattern. In a case where the position of the lines of the second reference pattern can be determined with higher position than the first position data of the first reference position, this leads to an improved accuracy of the reference position estimate.

In an embodiment, based on the second reference pattern, an orientation of the second reference pattern is determined, in relation to the first reference pattern and/or in relation to the region of interest. Thus, additional information is known about the second reference pattern and the determination of the second position data - and in further embodiments also the first position data and/or the reference position itself - is improved.

The orientation of the second reference pattern may be determined during the step of determining the second position data. For example, the width of a peak that is found in a line scan and/or during evaluation using a fitting algorithm may be used to determine the orientation of a feature of the second reference pattern, such as a line or a plurality of lines. The width in a line scan may depend on an angle under which a line is crossed. Also, a matching algorithm may be used to determine the orientation of a known shape of a feature of the second reference pattern. Also, a Fourier transformation step may be used, within the region of interest, in order to facilitate determining the orientation.

The orientation may be determined relative to a global or local coordinate system, for example, within a pixel matrix of the acquired image data or relative to a device for the image data acquisition. Similarly, the orientation may be determined relative to the region of interest within the image data. Also, the orientation of the second reference pattern may be determined relative to the first reference pattern. The first position data may contain information about the position and orientation of the first reference pattern.

The determined orientation may be used as an additional information about the object, on whose surface the second reference pattern is detected, as an information about the object's orientation within the detection area. A correction of the orientation may be performed based on the orientation information or other devices may be calibrated according to the orientation. Also, the orientation may be used to refine the definition of the region of interest, e.g., to have a defined orientation of the region of interest relative to the second reference pattern. Thus, the step of determining the orientation of the second reference pattern may facilitate an improvement of the determination of the second and first position data.

In an embodiment, based on the second reference pattern, a focus property during the acquisition of the image data is determined. The focus property may be a property of a device that is used for acquiring the image data. This step of focus determination may be performed while determining the second position data.

If the first or second reference pattern is not in focus, this leads to blurred lines and/or a broader width of peaks or linear structures of the first or second reference pattern. Thus, a line scan across a linear structure, such as parallel lines of a second reference pattern, may be used to determine whether the structures are in focus or not. Also, a focus correction parameter may be determined and used to adjust the focus of the device for acquiring the image data.

In an embodiment, a plurality of second reference positions is determined for a plurality of second reference patterns. This may advantageously facilitate an improved level of accuracy.

The second position data, which is determined based on the second reference pattern, may have one or more second reference positions, each corresponding to positions of features of the second reference pattern. If the second reference pattern has a plurality of equidistantly spaced lines or similar features, the positions may be determined for each feature within the region of interest and the known translational symmetry may be used to correct for noise or irregularities due to imperfections in the second reference pattern, the image acquisition setup or deviations of the object surface that carries the second reference pattern.

In an embodiment, based on the reference position, calibration data is determined and used to calibrate a treatment unit such as a laser engraving unit. Also, the method can be configured such that a plurality of reference positions is determined, e.g., for a plurality of features of the first reference pattern. Such reference positions can facilitate an optimum calibration of the treatment unit.

The treatment unit may be configured to manipulate the object, relative to whose surface the reference position is determined. The treatment unit may produce an imprint or an engraving on the surface, relative to the reference position. For example, the treatment unit may be a laser treatment device or a printer device. Also, the treatment unit may be configured to treat the surface such that a mark is produced, which is optically visible and/or provides tactile feedback. Also, the treatment unit may produce another feature at a specified location on the surface of the object, such as features for optical or electronic effects.

In an embodiment, the reference position is determined relative to a global or local coordinate system. The reference position may be determined relative to a coordinate system that is based on a defined position and a direction within a system for acquiring the image data and/or the treatment unit. A common coordinate system may be provided for the unit for acquiring the image data and for a treatment unit that is calibrated using the image data.

The system for determining a reference position on one side of a flat piece includes an image data acquisition unit that is configured to acquire image data and an evaluation unit. The evaluation unit is configured to receive the acquired image data from the image data acquisition unit, detect a first reference pattern based on the image data, and determine first position data for the first reference pattern. The evaluation unit is further configured to (1) define, based on the first position data, a region of interest in the image data, (2) to detect a second reference pattern in the region of interest and (3) to determine second position data for the second reference pattern. The reference position is determined based on the first position data and the second position data, and the determined reference position is output.

The system of the invention is configured to carry out the method. Thus, it has the same advantages as the method itself.

The system may also have an illumination unit that is configured to illuminate a detection area, on an object such as on one side of a flat piece. The illumination unit may be configured to be either color- or wavelength-selective. For example, a color filter may be used to produce the color- or wavelength-selective illumination. The illumination unit may be configured to illuminate the detection area with a color that is complementary to a color of a feature of the first and/or second reference patterns.

In one example, the illumination unit is provided with a red filter. Thus, cyan colored features appear with a low intensity in the acquired image data.

The system further includes an interface of the evaluation unit to output the reference position. This interface may be coupled to another unit of the system.

In an embodiment, the system also includes a treatment unit, such as a laser engraving unit, wherein the evaluation unit is further configured to determine calibration data based on the reference position and to provide the calibration data to the treatment unit for calibration.

In other embodiments, a separate unit is used to determine the calibration data for the treatment unit, e.g., a calibration unit or a control unit of the treatment unit.

Also, a plurality of determined reference positions can be used to calculate the calibration data.

The calibration data can be configured such that a defined coordinate system is established relative to the object to be treated, and the treatment unit can carry out a treatment using the correct coordinates.

With reference to the attached drawings, further details and advantages of the invention are described.
- Fig. 1: shows a schematic drawing of an embodiment of the system;
- Fig. 2: shows an embodiment of a first and second reference pattern;
- Fig. 3A and 3B: show an embodiment of the method; and
- Fig. 4: shows a flow diagram of the embodiment of the method.

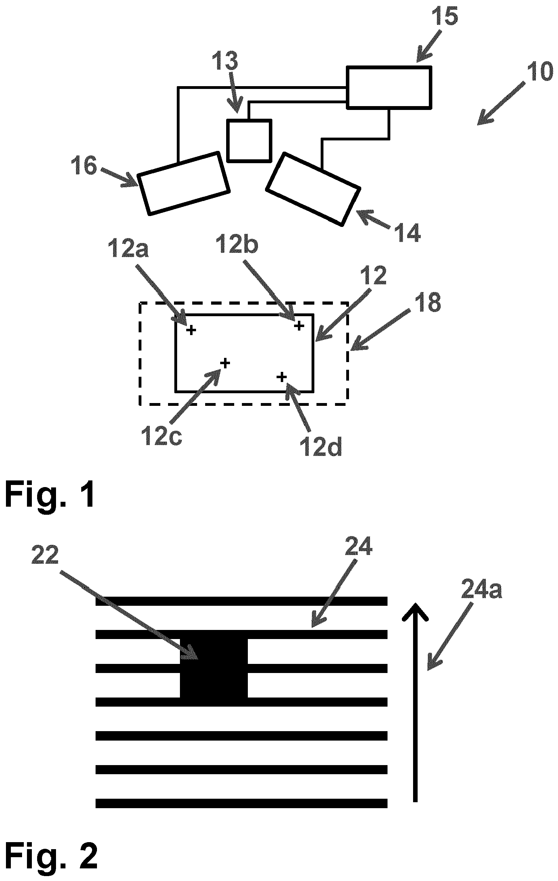

With reference to Fig. 1, a schematic drawing of an embodiment of the system is described.

The system 10 has an image data acquisition unit 14, in the present example a camera 14.

The camera 14 is directed to a surface of an object 12, in the present embodiment, a plastic card 12. The card 12 is held by a holder 18 in a defined position.

The card 12 may be a plain plastic card, for example, made of polycarbonate PC. The card 12 may have a window, *i.e.,* a transparent area, or a structured area, *e.g.,* with a lenticular structure or a tactile feature on the surface.

The camera 14 is configured as known in the art.

In the present case, the camera 14 is configured to acquire greyscale image data within a detection area.

In another embodiment, the camera 14 may be equipped with a filter to detect a wavelength-selective image. For example, a cyan color filter may be used to selectively image locations that reflect or absorb cyan wavelengths, respectively.

In the present embodiment, an illumination unit 13 is provided that is configured to illuminate the detection area on the surface of the card 12. Herein, the illumination unit 13 has a filter of a color that is complementary to the color of features that are included in the first and/or second reference patterns 22, 24, 32, 34 (for further details see below), thus using light at a specific wavelength or within a specific wavelength range.

In the present embodiment, a red filter is used for the illumination unit 13. Thus, cyan features (i.e. areas on the surface of the card 12 that reflect cyan wavelengths) are represented as low-intensity or dark areas within the acquire image data.

On the surface of the plastic card 12, reference positions 12a, 12b, 12c, 12d are located and provided with a first reference pattern. In the embodiment, the reference positions 12a, 12b, 12c, 12d are configured such that they can be detected by the wavelength-specific detection system of the camera 14; in particular, a cyan color is used to provide the first reference pattern.

Furthermore, the system 10 includes a treatment unit 16, which herein is a laser engraving unit 16. The laser engraving unit 16 is configured to perform a laser treatment and produce a laser engraving on the surface of the plastic card 12.

The system 10 also has an evaluation unit 15, which is coupled to both the image data acquisition unit 14 and the treatment unit 16. In particular, the evaluation unit 15 may act as a control unit for the camera 14 and/or the treatment unit 16.

Also, the illumination unit 13 is coupled to and may be controlled by the evaluation unit 15, for example to switch the illumination unit 13 on or off.

In further embodiments, the illumination unit 13 may be controlled to change filters in order to apply illumination with different colors for imaging differently colored features and/or reference patterns 22, 24, 32, 34 in subsequent image acquisition steps.

With reference to Fig. 2, an embodiment of a first and second reference pattern is described. These reference patterns are formed by a printing process on the surface of a plastic card such at the one shown above in the embodiment of Fig. 1.

The second reference pattern 24 includes a plurality of parallel straight lines, which are represented as running horizontally in Fig. 2. The parallel lines are distributed equidistantly, which leads to a periodic arrangement with a periodicity axis 24a, which is defined perpendicular to the parallel lines. Along this periodicity axis 24a, a translation of the second reference pattern 24 leads to substantially the same pattern 24 again.

To form the first reference pattern 22, a square is formed between two of the lines of the second reference pattern 24 in this embodiment. In this example, the square has an edge length of twice the distance between neighboring lines of the second reference pattern 24. In particular, the position of the first reference pattern 22 is defined as the position of the center of the square between the two lines of the second reference pattern 24. In the case of this embodiment, the square shaoe of the first reference pattern 22 is located on one of the lines of the second reference pattern 24. This knowledge can later be used to optimize the determined reference position.

In this embodiment, the first reference pattern 22 and second reference pattern 24 are formed such that they can be observed within a range of cyan color. For example, the lines of second reference pattern 24 are formed in cyan color, and the filter of the camera 14 is used to filter out other structures from further lines in magenta and yellow color between these lines. In the embodiment, this leads to image data, wherein lower intensity values are detected at the position of the lines and higher intensity values as a background of the lines.

In further embodiments, other colors or wavelengths or wavelength ranges can be used in a similar way. For example, the first reference pattern 22 and/or second reference pattern 24 can be formed with a color that is outside the visible range, such as infrared or ultraviolet.

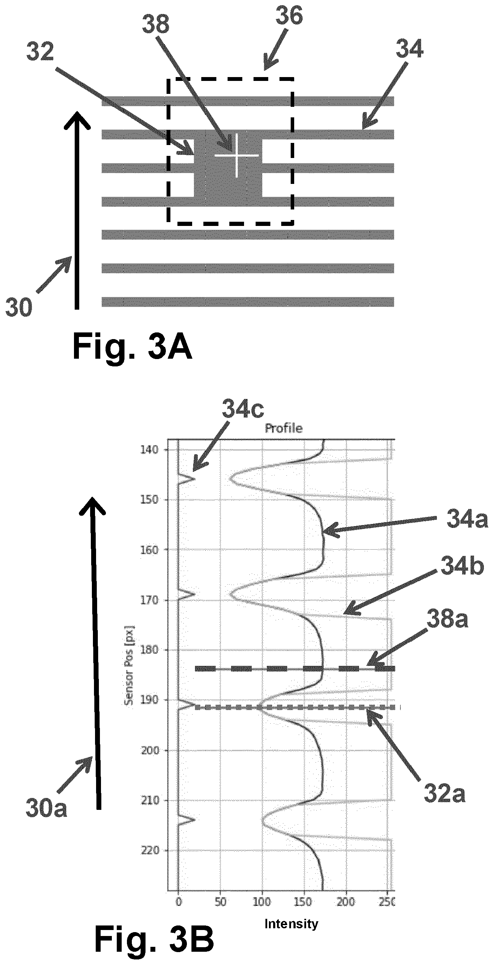

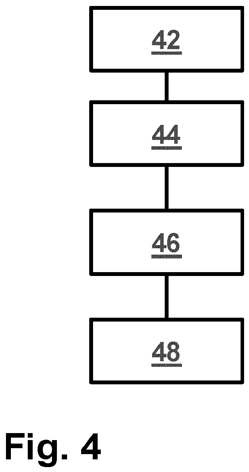

With reference to Fig. 3A and 3B, an embodiment of the method is described. In addition to that, Fig. 4 shows a schematic drawing of a flow diagram of the method. The following description is based using the system of Fig. 1 to carry out the invention.

In a first step 42, image data is acquired. This is performed using the camera 14, while the surface of the card 12 is illuminated by the illumination unit 13 with a red filter, i.e., it is illuminated with red light. Thus, cyan colored features appear dark in the image data. In the resulting image data, intensity values are determined for each pixel of a pixel matrix, thus representing the intensity of reflected light that is detected at corresponding locations within the detection area.

Fig. 3A shows a schematic example of such image data with a second reference pattern 34 having parallel straight lines 34 and a first reference pattern 32 at a reference position, where a square area is provided between parallel lines 34.

In a second step 44, a matching algorithm is used to determine the position of the first reference pattern, *i.e.,* to identify the square shape and find the center point of the square shape between the parallel lines 34 at the first reference pattern 32. In this step, first position data is determined with a first position estimate 38 for the reference position, which is indicated by a cross 38 in Fig. 3A.

As can be seen from Fig. 3A, the first position estimate is inaccurate, since it is offset relative to the actual position of the center of first reference pattern 32. This can be caused by, *e.g.,* noise in the image data, uneven lighting conditions, or due to a limited accuracy of the model that is used by the matching algorithm.

Also in this step 44, a region of interest (ROI) 36 is defined, using the determined first position estimate 38 as a midpoint and selecting a rectangle within the image data. The rectangular region of interest 36 is elongated and has a length or longitudinal axis in the direction of the periodicity axis 30. On the other hand, a width or lateral axis of the region of interest 36 is defined in the direction of the parallel lines 34.

In further embodiments, the region of interest 36 may be positioned relative to the first position estimate 38 in another way, such as with a defined offset relative to the first position estimate 38. The first position estimate 38 may be positioned at one corner of the region of interest 36 or it may be located at one of its sides. In further embodiments, the region of interest 36 may be defined such that it has a defined size and it is positioned such that it both includes the first position estimate 38 and an optimized area of the second reference pattern 34 as well.

In a subsequent step 46, a line scan is performed within the region of interest 36. The intensity values for each row of pixels within the region of interest 36 are summed up and plotted *versus* the pixel position. The graph of Fig. 3B shows the resulting intensity data 34a in dependence of the location, *i.e.,* the position along the line scan direction, which is the periodicity axis 30a - in this case this is given by the number of the respective row of pixels within the pixel matrix.

In another embodiment, a second region of interest is defined around the first position estimate 38 and this area is excluded from the line scan. Thus, the line scan data is not affected by the irregularities that are caused by the first reference pattern 32. For example, it can be avoided that the square shape in this embodiment influences the line scan data, which is supposed to reflect the properties of the second reference pattern 34.

A fitting algorithm is used to locate positions along the line scan 34a, where a local minimum is reached, indicating that this is a position of one of the parallel lines 34. In the graph of Fig. 3B, the fitted data is shown as an idealized curve 34b with flat background intensity, and the amplitude, position and width parameters of the peaks for each of the lines 34 are determined. As seen from the graph, the fitted data 34b fit the measured intensity data 34a very well.

Using the fitted data 34b, the positions of peaks are determined. In particular, the positions are found as parameters of the fitted function during the fitting procedure. On the other hand, it is known as a boundary condition that the parallel lines 34 are equidistantly distributed, i.e., there are equal distances between the peaks. In Fig. 3B, these peak positions are also shown by a line 34c with spikes at each peak location. For example, a regression method can be used to determine the exact location.

In addition to that, the graph of Fig. 3B shows the first position estimate 38a as a broken line.

In another step 48, the reference position is determined from the first and second position data. To this end, it is determined which peak of the second reference pattern is located closest to the first position estimate 38a, and a corrected value is determined for the reference position 32a, which is shown as a dotted line. Herein, the knowledge is used that the center point of the square shape that represents the first reference pattern 32 is located on one of the parallel lines 34.

Finally, the corrected value for the reference position is output and transmitted to the treatment unit 16 for a calibration step. To this end, calibration data is determined and the treatment is adjusted such that it is applied to the desired area on the card 12.

By this method, the reference position can be measured accurately with respect to a feature of the second reference pattern, such as the position of a line as a feature of the second reference pattern. A standard model match procedure can be used first to estimate the fiducial location and thereby determine the region of interest. Then, starting from the estimate for the fiducial, a line scan or profile of the cross-section of the image can be generated over a number of lines within the second reference pattern. This profile represents an average over a defined width of the cross-section for each of the lines, and the center positions of these averaged lines can be determined as a local minimum within this profile. A linear regression method can be applied to this number of minima to average out disturbances or noise in the image data. The desired position of the cyan line next to the fiducial can be extracted out of these measurements by taking the closest negative peak position. As a result of this method, the desired cyan line position is measured based on the average of the position estimates of a set of cyan lines around the required position. This method is less sensitive to disturbances, noise and deviations in the image. Based on the averaging over an area, the resulting position is of a higher accuracy.

### Reference signs

- 10: System
- 12: Object; flat piece; plastic card
- 12a, 12b, 12c, 12d: Reference position
- 13: Illumination unit
- 14: Image data acquisition unit; camera
- 15: Evaluation unit
- 16: Treatment unit; laser engraving unit
- 18: Holder
- 22: First reference pattern
- 24: Second reference pattern; parallel lines
- 24a: Periodicity axis
- 30: Periodicity axis
- 30a: Line scan axis
- 32: First reference pattern
- 32a: Reference position (graph)
- 34: Second reference pattern; parallel lines
- 34a: Line scan (intensity)
- 34b: Fit data
- 34c: Peak positions
- 36: Region of interest
- 38: Cross, first position estimate
- 38a: Position estimate (graph)
- 42, 44, 46, 48: Step

## Claims

1. Method for determining a reference position (12a, 12b, 12c, 12d), in particular on one side of a flat piece (12), wherein
image data is acquired;
a first reference pattern (32) is detected based on the image data, and first position data is determined for the first reference pattern (32);
based on the first position data, a region of interest (36) is defined in the image data;
in the region of interest (36), a second reference pattern (34) is detected and second position data is determined for the second reference pattern (34);
based on the first position data and the second position data, the reference position (12a, 12b, 12c, 12d) is determined.

2. Method according to claim 1,
**characterized in that**
a color-specific or wavelength-specific illumination is applied while acquiring the image data, in particular using a filter, and/or the image data is acquired using a wavelength-selective photosensitive device, in particular using a filter.

3. Method according to one of the preceding claims,
**characterized in that**
the first reference pattern (32) comprises crossing lines, a dot shape, an elliptical, round, rectangular or square shape.

4. Method according to one of the preceding claims,
**characterized in that**
the second reference pattern (34) comprises a plurality of features that are arranged periodically along a periodicity axis (30).

5. Method according to claim 4,
**characterized in that**
the second reference pattern (34) comprises parallel lines (30), which run perpendicular to the periodicity axis (30).

6. Method according to claim 4 or 5,
**characterized in that**
an integration and/or averaging step is performed on the image data within the region of interest, wherein the image data is integrated and/or averaged along a direction perpendicular to the periodicity axis (30).

7. Method according to one of the preceding claims,
**characterized in that**
determining the second position data comprises a line scan within the region of interest (36), in particular including integrating and/or averaging image data in a direction perpendicular to the direction of the line scan.

8. Method according to one of the preceding claims,
**characterized in that,**
based on the second reference pattern (34), an orientation of the second reference pattern (34) is determined, in particular in relation to the first reference pattern (32) and/or in relation to the region of interest (36).

9. Method according to one of the preceding claims,
**characterized in that,**
based on the second reference pattern (34), a focus property during the acquisition of the image data is determined.

10. Method according to one of the preceding claims,
**characterized in that**
a plurality of second reference positions is determined for a plurality of second reference patterns (34).

11. Method according to one of the preceding claims,
**characterized in that**
based on the reference position (12a, 12b, 12c, 12d), calibration data is determined and used to calibrate a treatment unit (16), in particular a laser engraving unit (16).

12. Method according to one of the preceding claims,
**characterized in that**
the reference position (12a, 12b, 12c, 12d) is determined relative to a global or local (relative or absolute) coordinate system.

13. System for determining a reference position (12a, 12b, 12c, 12d), in particular on one side of a flat piece (12), comprising
an image data acquisition unit (14) that is configured to acquire image data; and
an evaluation unit (15), which is configured to:
receive the acquired image data from the image data acquisition unit (14);
detect a first reference pattern (32) based on the image data, and determine first position data for the first reference pattern (32);
based on the first position data, define a region of interest (36) in the image data;
in the region of interest (36), detect a second reference pattern (34) and determine second position data for the second reference pattern (34);
based on the first position data and the second position data, determine the reference position (12a, 12b, 12c, 12d); and
output the reference position (12a, 12b, 12c, 12d).

14. System according to claim 13,
further comprising an illumination unit (13) that is configured to illuminate a detection area, in particular on the flat piece (12);
wherein the illumination unit (13) is optionally configured color- or wavelength-selective, for example comprising a color filter.

15. System according to claim 14,
further comprising a treatment unit (16), in particular a laser engraving unit (16), wherein
the evaluation unit (15) is further configured to determine calibration data based on the reference position (12a, 12b, 12c, 12d) and to provide the calibration data for a calibration of the treatment unit (16).
